# EUROPÄISCHE PATENTSCHRIFT

(11) **EP 4 204 110 B1**
(45) Veröffentlichungstag und Bekanntmachung des Hinweises auf die Patenterteilung: **05.03.2025**
(21) Anmeldenummer: 21761963.4
(22) Anmeldetag: 19.08.2021
(51) Int. Cl.: A63C 11/06

(54) **BEARBEITUNGSVORRICHTUNG FÜR EINEN SKI**
PROCESSING DEVICE FOR A SKI
DISPOSITIF DE TRAITEMENT POUR UN SKI

(30) Priorität: 31.08.2020 AT 507362020
(43) Veröffentlichungstag der Anmeldung: 05.07.2023
(73) Patentinhaber: WINTERSTEIGER Sports GmbH, 4910 Ried im Innkreis (AT)
(72) Erfinder: AIGNER, Johann, 4912 Neuhofen im Innkreis (AT); FEICHTINGER, Günter Richard, 4782 St. Florian/Inn (AT); NIKLAS, Christoph, 4910 Ried im Innkreis (AT); BERGER, Robert, 4672 Bachmanning (AT)
(74) Vertreter: Hübscher & Partner Patentanwälte GmbH
(86) Internationale Anmeldenummer: PCT/AT2021/060289
(87) Internationale Veröffentlichungsnummer: WO 2022/040709

(56) Entgegenhaltungen:
- EP-A1- 1 129 748
- EP-A1- 1 228 840
- AT-B- 413 651
- FR-A1- 2 958 174

## Beschreibung

### Technisches Gebiet

Die Erfindung bezieht sich auf eine Bearbeitungsvorrichtung für einen Ski mit einer Auflage für den Ski und einer Fördereinrichtung für den Ski in Skilängsrichtung entlang der Auflage.

### Stand der Technik

Zum Bearbeiten der Stahlkanten eines Skis sind Vorrichtungen bekannt, bei denen die Stahlkanten des auf einer Auflage in Längsrichtung geführten Skis mithilfe zweier einander bezüglich des Skis gegenüberliegender Werkzeuge geschliffen werden, die mit einer entsprechenden Anstellkraft an den Ski angestellt werden und dadurch dem Längsverlauf der Stahlkanten automatisch folgen, wenn der Ski in Längsrichtung gegenüber den Schleifwerkzeugen bewegt wird.

Patentschrift EP 1129748 A1 offenbart eine derartige Vorrichtung. Um die Effektivität des Schleifprozesses zu erhöhen, können die zu schleifenden Seitenkanten der Stahlkanten durch ein Abtragen der Seitenwangen des Skis freigestellt werden. Die AT 413 651 B zeigt eine solche Einrichtung zum Abtragen der Seitenwangen eines Skis mithilfe einer Schneide, die an einem mit einer Führungsfläche versehenen Griffteil angeordnet ist. Zum Bearbeiten des Skis wird der Griffteil mit der Führungsfläche auf die Lauffläche des Skis aufgesetzt und von Hand aus entlang der Skilängskante bewegt, wobei die Schneide die an die Stahlkante angrenzende Seitenwange des Skis spanabhebend abträgt, um die Stahlkante für einen nachfolgenden Schleifvorgang besser zugänglich zu machen. Nachteilig ist allerdings, dass die spanabhebende Bearbeitung der Seitenwangen manuell ausgeführt werden muss, wodurch die Bearbeitungsqualität vom handwerklichen Geschick des Anwenders abhängt. Außerdem ist eine gesonderte Bearbeitung der Seitenwangen eines Skis von Hand aus vor einem maschinellen Kantenschleifen zeitaufwendig und wird daher üblicherweise mit der Folge unterlassen, dass eine höhere Anzahl von Schleifzyklen für die Bearbeitung der Stahlkanten in Kauf genommen wird, was wiederum die auf die Anzahl der bearbeitbaren Skier bezogene Standzeit der Schleifwerkzeuge verkürzt.

### Darstellung der Erfindung

Der Erfindung liegt somit die Aufgabe zugrunde, eine Bearbeitungsvorrichtung zu schaffen, mit deren Hilfe die Seitenwangen eines Skis vor dem Kantenschleifen einfach mit einem vergleichsweise geringen Zeitaufwand in einer vorgegebenen Güte abgetragen werden können.

Ausgehend von einer Bearbeitungsvorrichtung der eingangs geschilderten Art löst die Erfindung die gestellte Aufgabe dadurch, dass der Auflage eine Einrichtung zum Bearbeiten der Seitenwangen des Skis mit wenigstens einem Schneidwerkzeug zugeordnet wird, das auf einem quer zur Förderrichtung und parallel zur Auflage verstellbar geführt Werkzeugträger angeordnet und mithilfe eines federnden Stelltriebs für den Werkzeugträger unter einer federnden Vorspannung an die zu bearbeitende Seitenwange des entlang der Auflage geförderten Skis anstellbar ist.

Da die Einrichtung zum spanabhebenden Bearbeiten der Seitenwangen eines Skis in Verbindung mit einer Bearbeitungsvorrichtung zum Einsatz kommt, die eine Auflage für den Ski aufweist, entlang der der Ski in Längsrichtung gefördert wird, kann diese Skiführung vorteilhaft für die Einrichtung zur Seitenwangenbearbeitung genützt werden, weil die Auflage eine konstruktive Bezugsvorgabe für die Einrichtung zur Seitenwangenbearbeitung bildet, was eine wesentliche Voraussetzung für eine genaue Führung des Schneidwerkzeugs in Bezug auf den Laufflächenabstand ist. Die Längsführung des Schneidwerkzeugs entlang der Skitaillierung ergibt sich während der Skiförderung in Längsrichtung automatisch durch die federnde Beaufschlagung des Werkzeugträgers quer zur Förderrichtung des Skis. Diese Querbeaufschlagung des parallel zur Auflage und quer zur Förderrichtung verstellbaren Werkzeugträgers bedingt ja ein Anstellen des Schneidwerkzeugs an die Seitenwange des Skis mit einer vorgebbaren Anstellkraft, wobei die Seitenwange bzw. die Stahlkante selbst die Führung des Schneidwerkzeugs während des Skivorschubs übernimmt. Aufgrund der federnden Beaufschlagung des Werkzeugträgers quer zur Seitenwange des Skis wird die Einrichtung auch unabhängig von der Breite und dem Kantenverlauf des zu bearbeitenden Skis, sodass die Seitenwangen aller möglichen Skiarten einschließlich von Snowboards bearbeitet werden können, ohne die Bearbeitungsvorrichtung aufwendig umrüsten zu müssen.

Obwohl zur Verlagerung des Werkzeugträgers quer zu der zu bearbeitenden Seitenwange des Skis unterschiedliche Maßnahmen getroffen werden können, der Werkzeugträger könnte zu diesem Zweck beispielsweise auf einem um eine zur Skiauflage senkrechte Achse verschwenkbaren Arm vorgesehen sein, ergeben sich einfache, platzsparende Konstruktionsbedingungen, wenn die Einrichtung zum Bearbeiten der Seitenwangen des Skis ein Gestell mit einer quer zur Förderrichtung und parallel zur Auflage verlaufenden Führungsschiene für den durch den federnden Stelltrieb antreibbaren Werkzeugträger aufweist.

Um die beiden Seitenwangen eines Skis gleichzeitig spanabhebend bearbeiten zu können, kann die Einrichtung zum Bearbeiten der Seitenwangen des Skis ein vorteilhaft ein Gestell mit zwei beidseits der Auflage vorgesehenen, quer zur Förderrichtung und parallel zur Auflage verlagerbaren Werkzeugträgern für je ein Schneidwerkzeug sowie einen Stelltrieb zur federnden Beaufschlagung der Werkzeugträger umfassen. Die gleichzeitige Bearbeitung der beiden Seitenwangen eines Skis bringt nicht nur den Vorteil der Verkürzung der Bearbeitungszeit mit sich, sondern vereinfacht auch die Skiführung zwischen den von gegenüberliegenden Seiten an den Ski angestellten Schneidwerkzeugen, sodass sich eine sonst allenfalls erforderliche Skiabstützung auf der dem Schneidwerkzeug gegenüberliegenden Seite des Skis erübrigt.

Für die beiden Werkzeugträger kann in diesem Fall vorteilhaft eine gemeinsame, quer zur Förderrichtung und parallel zur Auflage verlaufende Führungsschiene für die beiden Werkzeugträger im Gestell vorgesehen werden.

Um die dem Seitenwangenabtrag nachfolgende Bearbeitung des Skis, insbesondere das Kantenschleifen, nicht durch die Einrichtung zum Bearbeiten der Seitenwangen zu stören, genügt es, den Ski seitlich durch ein Verlagern der Werkzeugträger weg vom Ski freizustellen. Dies kann durch die federnden Stelltriebe, aber auch durch zusätzliche Stelltriebe vorgenommen werden, mit deren Hilfe beispielsweise eine Anpassung an unterschiedliche Breitenbereiche der Skier und Snowboards möglich ist.

Wird das Gestell um eine zur Förderrichtung parallele Schwenkachse zwischen einer Arbeitsstellung und einer Wartungsstellung verschwenkbar gelagert, so kann in einfacher Weise der Zugang zu den Schneidwerkzeugen, aber auch zu Einrichtungen der Bearbeitungsvorrichtung im Bereich des Gestells freigegeben werden.

Um die federnde Anstellung der Schneidwerkzeuge an die Seitenwangen des Skis den jeweiligen Anforderungen entsprechend einstellen zu können, kann die federnde Vorspannung der Schneidwerkzeuganstellung durch entsprechende Maßnahmen im Bereich der Stelltriebe für den jeweiligen Werkzeugträger einstellbar sein. Dies gelingt in besonders vorteilhafter Weise, wenn als Stelltrieb jeweils ein Pneumatikzylinder vorgesehen wird, was jedoch keineswegs zwingend ist. Mit der Wahl der federnden Vorspannung der Schneidwerkzeuganstellung wird unmittelbar auf die Spandicke der von den Seitenwangen des Skis abzutragenden Späne Einfluss genommen.

Die von der Seitenwange abgetrennten Späne verschmutzen den Arbeitsbereich und können den automatisierten Bearbeitungsvorgang behindern. Dies kann vermieden werden, indem die Einrichtung wenigstens eine Düse zum Abtransport der Späne umfasst. Die Düse sprüht Spülfluid so in Richtung der Seitenwange, dass die durch den Schneidvorgang entstehenden Späne durch den Druck des Spülfluids in ein dafür vorgesehenes Areal, beispielweise ein Auffangbecken, bewegt werden. Als Spülfluid kann vorteilhaft Luft oder Wasser verwendet werden.

### Kurze Beschreibung der Erfindung

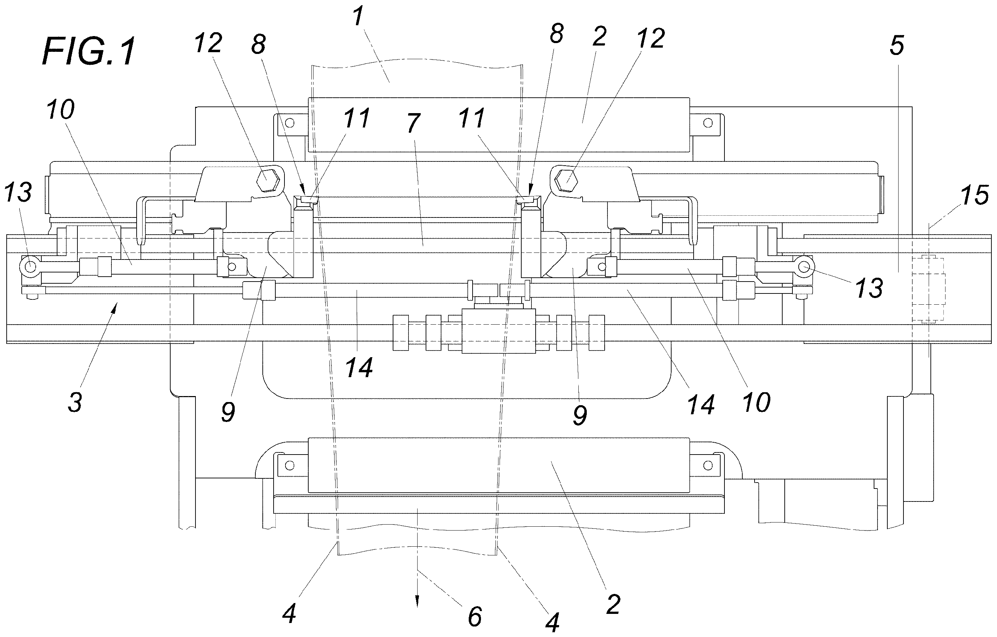

In der Zeichnung ist der Erfindungsgegenstand beispielsweise dargestellt. Es zeigen
- Fig. 1: eine erfindungsgemäße Bearbeitungsvorrichtung ausschnittsweise in einer Draufsicht und

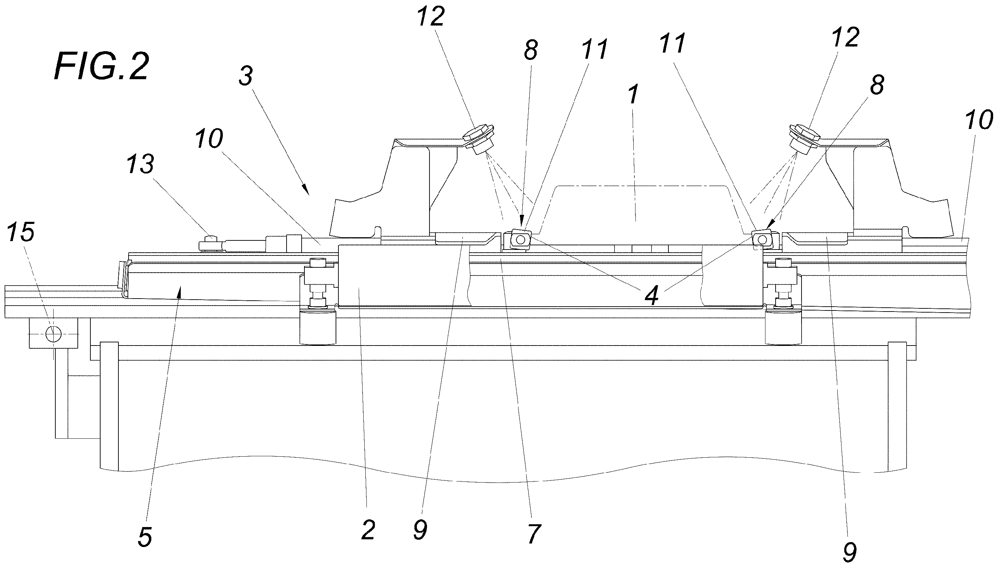

- Fig. 2: die Bearbeitungsvorrichtung nach der Fig. 1 in einer zum Teil aufgerissenen Stirnansicht in einem größeren Maßstab.

### Wege zur Ausführung der Erfindung

Die dargestellte Bearbeitungsvorrichtung für einen Ski 1 umfasst eine Auflage 2 für den Ski 1 in Form eines Rollgangs und eine Fördereinrichtung für den Ski 1 in Skilängsrichtung entlang der Auflage 2. Dieser Skiführung sind übliche Werkzeuge für die Bearbeitung der Stahlkanten bzw. der Lauffläche des Skis 1 zugeordnet, was jedoch aus Übersichtlichkeitsgründen nicht dargestellt ist. Neu an dieser Bearbeitungsvorrichtung ist eine zusätzliche Einrichtung 3 zum Bearbeiten der Seitenwangen 4 des Skis 1. Diese Einrichtung 3 weist ein Gestell 5 auf, das eine quer zur Förderrichtung 6 verlaufende, zur Auflage 2 parallele Führungsschiene 7 für zwei je ein Schneidwerkzeug 8 aufnehmende Werkzeugträger 9 umfasst. An den schlittenartig ausgebildeten Werkzeugträgern 9 greifen federnde Stelltriebe 10 an, mit deren Hilfe die Schneidwerkzeuge 8 unter einer federnden Vorspannung an die Seitenwangen 4 des entlang der Auflage 2 der Bearbeitungsvorrichtung geförderten Skis 1 angestellt werden. Wird der Ski 1 in Längsrichtung gegenüber der Einrichtung 3 bewegt, trennen die Schneidwerkzeuge 8 einen Span von den Seitenwangen 4 des Skis 1 ab und stellen somit die Seitenkanten der Stahlkanten des Skis 1 für eine besser Schleifbearbeitung frei.

Als Schneidwerkzeuge 8 werden vorteilhaft Wendeplatten 11 eingesetzt, was jedoch nicht zwingend ist, weil es ja lediglich darauf ankommt, die an die Stahlkanten anschließenden Seitenwangen 4 des Skis 1 spanabhebend zu bearbeiten, sodass alle hierfür geeigneten spanenden Schneidwerkzeuge einschließlich angetriebener Fräser eingesetzt werden könnten.

Die Stelltriebe 10 zur federnden Beaufschlagung der Werkzeugträger 9 sind gemäß dem dargestellten Ausführungsbeispiel als Pneumatikzylinder ausgebildet, über die die Anstellkraft der Schneidwerkzeuge 8 an die Seitenwangen 4 des Skis 1 in Abhängigkeit von den jeweiligen Anforderungen eingestellt werden kann. Um zu verhindern, dass der von den Schneidwerkzeugen 8 abgetrennte Span den Bearbeitungsvorgang behindert oder den Arbeitsbereich verschmutzt, kann je Seitenwange 4 wenigstens eine Düse 12 für ein Spülfluid vorgesehen sein, mit dessen Hilfe die Späne aus dem Skibereich weggefördert und abgeführt werden können.

Wie bereits erwähnt wurde, kann die Einrichtung 3 zur Seitenwangenbearbeitung von Skiern unterschiedlicher Breite einschließlich Snowboards verwendet werden. Um dabei für die Pneumatikzylinder 11 kurze Anstellwege zur Verfügung stellen zu können, können die gestellfesten Anlenkpunkte 13 dieser Pneumatikzylinder 11 in Anstellrichtung eingestellt werden. Zu diesem Zweck ist für jeden dieser Anlenkpunkte 13 ein Stelltrieb 14, beispielsweise ein Stellzylinder, vorgesehen.

Um den Zugang zu den Schneidwerkzeugen 8 oder zu im Bereich des Gestells 5 angeordneten Funktionsteilen der Bearbeitungsvorrichtung zu erleichtern, kann das Gestell 5 aus der dargestellten Arbeitsstellung um eine parallel zur Förderrichtung 6 ausgerichtete Achse 15 von der Auflage 2 weg in eine Wartungsstellung geschwenkt werden.

## Patentansprüche

1. Bearbeitungsvorrichtung für einen Ski (1) mit einer Auflage (2) für den Stahlkanten aufweisenden Ski (1) und einer Fördereinrichtung für den Ski (1) in Skilängsrichtung entlang der Auflage (2), **dadurch gekennzeichnet, dass** der Auflage (2) eine Einrichtung (3) zum Bearbeiten der an die Stahlkanten anschließenden Seitenwangen (4) des Skis (1) mit wenigstens einem Schneidwerkzeug (8) zugeordnet ist, das auf einem quer zur Förderrichtung (6) und parallel zur Auflage (2) verstellbar geführten Werkzeugträger (9) angeordnet und mithilfe eines federnden Stelltriebs (10) für den Werkzeugträger (9) unter einer federnden Vorspannung an die zu bearbeitende Seitenwange (4) des entlang der Auflage (2) geförderten Skis (1) anstellbar ist.

2. Bearbeitungsvorrichtung nach Anspruch 1, **dadurch gekennzeichnet, dass** die Einrichtung (3) zum Bearbeiten der Seitenwangen (4) des Skis (1) ein Gestell (5) mit einer quer zur Förderrichtung (6) und parallel zur Auflage (2) verlaufenden Führungsschiene (7) für den durch den federnden Stelltrieb (10) antreibbaren Werkzeugträger (9) aufweist.

3. Bearbeitungsvorrichtung nach Anspruch 1, **dadurch gekennzeichnet, dass** die Einrichtung (3) zum Bearbeiten der Seitenwangen (4) des Skis (1) ein Gestell (5) mit zwei beidseits der Auflage (2) vorgesehenen, quer zur Förderrichtung (6) und parallel zur Auflage (2) verlagerbaren Werkzeugträgern (9) für je ein Schneidwerkzeug (8) sowie einen Stelltrieb (10) zur federnden Beaufschlagung der Werkzeugträger (9) umfasst.

4. Bearbeitungsvorrichtung nach Anspruch 3, **dadurch gekennzeichnet, dass** das Gestell (5) eine quer zur Förderrichtung (6) und parallel zur Auflage (2) verlaufende, gemeinsame Führungsschiene (7) für die beiden Werkzeugträger (9) aufweist.

5. Bearbeitungsvorrichtung nach einem der Ansprüche 2 bis 4, **dadurch gekennzeichnet, dass** das Gestell (5) um eine zur Förderrichtung (6) parallele Schwenkachse (15) zwischen einer Arbeitsstellung und einer Wartungsstellung verschwenkbar gelagert ist.

6. Bearbeitungsvorrichtung nach einem der Ansprüche 1 bis 5, **dadurch gekennzeichnet, dass** die federnde Vorspannung der Schneidwerkzeuganstellung einstellbar ist.

7. Bearbeitungsvorrichtung nach einem der Ansprüche 1 bis 6, **dadurch gekennzeichnet, dass** als Stelltrieb (10) jeweils ein Pneumatikzylinder vorgesehen ist.

8. Bearbeitungsvorrichtung nach einem der Ansprüche 1 bis 7, **dadurch gekennzeichnet, dass** die Einrichtung (3) wenigstens eine Düse (12) zum Abtransport der bei der Seitenwangenbearbeitung anfallenden Späne aufweist.

## Claims

1. Machining apparatus for a ski (1), which ski (1) has steel edges, with a support (2) for the ski (1) and a conveying device for the ski (1) in the longitudinal direction of the ski (1) along the support (2), **characterized in that** a device (3) for machining the sidewalls (4) of the ski (1), which sidewalls (4) adjoin the steel edges, with at least one cutting tool (8) is associated with the support (2), which cutting tool (8) is arranged on a tool carrier (9) which is adjustably guided transversely to the conveying direction (6) and parallel to the support (2) and which can be, with the aid of an elastic actuating drive (10) for the tool carrier (9), under an elastic prestress set against the sidewall (4) to be machined of the ski (1) conveyed along the support (2).

2. Machining apparatus according to claim 1, **characterized in that** the device (3) for machining the sidewalls (4) of the ski (1) has a frame (5) with a guide rail (7) running transversely to the conveying direction (6) and parallel to the support (2) for the tool carrier (9) which can be driven by the elastic actuating drive (10).

3. Machining apparatus according to claim 1, **characterized in that** the device (3) for machining the sidewalls (4) of the ski (1) comprises a frame (5) with two tool carriers (9) provided on both sides of the support (2) and displaceable transversely to the conveying direction (6) and parallel to the support (2), each for a cutting tool (8), and further comprises an actuating drive (10) for elastic application of the tool carriers (9).

4. Machining apparatus according to claim 3, **characterized in that** the frame (5) has a common guide rail (7) for the two tool carriers (9), which guide rail (7) runs transversely to the conveying direction (6) and parallel to the support (2).

5. Machining apparatus according to one of claims 2 to 4, **characterized in that** the frame (5) is mounted pivotable about a pivot axis (15) parallel to the conveying direction (6) between a working position and a maintenance position.

6. Machining apparatus according to one of claims 1 to 5, **characterized in that** the elastic prestress of the cutting tool positioning is adjustable.

7. Machining apparatus according to one of claims 1 to 6, **characterized in that** a pneumatic cylinder is provided as actuating drive (10) in each case.

8. Machining apparatus according to one of claims 1 to 7, **characterized in that** the device (3) has at least one nozzle (12) for removing the chips produced during sidewall machining.

## Revendications

1. Dispositif d'affûtage pour ski (1) comprenant un support (2) pour le ski (1) présentant des bords en acier et un dispositif de transport pour le ski (1) dans la direction longitudinale du ski le long du support (2), **caractérisé en ce qu'**au support (2) est associé un moyen (3) destiné à affûter les carres (4) du ski (1) reliées aux bords en acier à l'aide d'au moins un outil de coupe (8) qui est disposé sur un porte-outil (9) dirigé de manière réglable transversalement à la direction de transport (6) et parallèlement au support (2) et peut être utilisé à l'aide d'un actionneur à ressort (10) pour le porte-outil (9) sous l'action d'une précontrainte à ressort sur la carre à affuter (4) du ski (1) transporté le long du support (2).

2. Dispositif d'affûtage selon la revendication 1, **caractérisé en ce que** le moyen (3) destiné à affûter les carres (4) du ski(1) présente un châssis (5) avec un rail de guidage (7) s'étendant transversalement à la direction de transport (6) et parallèlement au support (2) pour le porte-outil (9) qui peut être entraîné par l'actionneur à ressort (10).

3. Dispositif d'affûtage selon la revendication 1, **caractérisé en ce que** le moyen (3) destiné à affûter les carres (4) du ski (1) comprend un châssis (5) avec deux porte-outils (9) prévus des deux côtés du support (2) et pouvant être déplacés transversalement à la direction de transport (6) et parallèlement au support (2), pour un outil de coupe (8) à chaque fois, ainsi qu'un actionneur (10) pour la sollicitation à ressort du porte-outil (9).

4. Dispositif d'affûtage selon la revendication 3, **caractérisé en ce que** le châssis (5) présente un rail de guidage (7) commun aux deux porte-outils (9), qui s'étend transversalement à la direction de transport (6) et parallèlement au support (2).

5. Dispositif d'affûtage selon une des revendications 2 à 4, **caractérisé en ce que** le châssis (5) est monté pivotant, entre une position de travail et une position de maintenance, autour d'un axe de pivotement (15) parallèle à la direction de transport (6).

6. Dispositif d'affûtage selon une des revendications 1 à 5, **caractérisé en ce que** la précontrainte à ressort pour l'utilisation de l'outil de coupe est réglable.

7. Dispositif d'affûtage selon une des revendications 1 à 6, **caractérisé en ce qu'**un vérin pneumatique est prévu pour servir d'actionneur (10).

8. Dispositif d'affutage selon une des revendications 1 à 7, **caractérisé en ce que** le moyen (3) présente au moins une buse (12) pour l'évacuation des copeaux produits lors de l'affûtage des carres.
